# EUROPÄISCHE PATENTANMELDUNG

(11) **EP 4 509 358 A1**
(43) Veröffentlichungstag der Anmeldung: **19.02.2025**
(21) Anmeldenummer: 23191540.6
(22) Anmeldetag: 15.08.2023
(51) Int. Cl.: B60P 3/34, F16G 13/20

(54) **SCHUBKETTEN UND SCHUBKETTENGLIED HIERFÜR**

(71) Anmelder: XKuub B.V., 2153 GE Nieuw-Vennep (NL)
(72) Erfinder: Blom, Petrus Hendricus Maria, 2153GE Nieuw-Vennep (NL); Helmling, Markus Johannes, 89160 Dornstadt (DE)
(74) Vertreter: Witte, Weller und Partner Patentanwälte mbB Stuttgart

(57) **Zusammenfassung**

Vorgeschlagen wird eine Schubkette (20), die aus einer Mehrzahl von Schubkettengliedern (50) besteht, die schwenkbeweglich aneinander angebracht sind und die in einem in einer Ausfahrrichtung (4A) ausgefahrenen Zustand der Schubkette (20) in einer Längsrichtung (2) der Schubkettenglieder (50) orientiert sind. Die Schubkettenglieder (50) weisen jeweils zwei Kettengliedelemente (70, 80) auf, die direkt oder unter Verwendung eines Kopplungselements (90) miteinander ortsfest gekoppelt sind und gemeinsam die Außenkontor des Schubkettengliedes (50) definieren.

## Beschreibung

### ANWENDUNGSGEBIET UND STAND DER TECHNIK

Die Erfindung betrifft eine Schubkette und ein Kettenglied hierfür sowie einen Schubkettenverbund und ein Schubkettenmodul miteinersolchen Schubkette. Die Erfindung betrifft weiterhin eine Slide-Out-Anordnung für ein Wohnmobil oder einen Caravan-Anhänger sowie ein Wohnmobil oder einen Caravan-Anhänger mit einer solchen Slide-Out-Anordnung.

Gattungsgemäße Slide-Out-Anordnung ermöglichen die Handhabung von verfahrbaren Slide-Out-Kästen. Solche Slide-Out-Kästen stellen Erweiterungen für den Innenraum eines Fahrzeugs wie eines Wohnmobils oder eines Caravan-Anhängers dar, die in einer Slide-Out-Aussparung einer Fahrzeugwand positioniert sind und zwischen einer eingefahrenen Stau-Endlage und einer ausgefahrenen Nutz-Endlage verfahrbar sind. Die ausgefahrene Nutz-Endlage führt dazu, dass der Innenraum des Fahrzeugs in etwa um die Größe des Slide-Out-Kastens vergrößert ist. Dies kann beispielsweise bei stationärer Verwendung des Fahrzeugs genutzt werden, um den Wohnraum eines Reisemobils zu vergrößern.

Gattungsgemäße Schubketten sind Ketten aus baugleichen oder bauähnlichen Kettengliedern, die ausreichend stark ausgebildet sind, um in einer gestreckten Ausfahrrichtung der Schubkette Drucckräfte zu übertragen. Grundsätzlich kann eine solche Schubkette als in der Kettenebene bidirektional knickbare Kette ausgebildet sein. Bekannt und bevorzugt sind jedoch Schubketten, die die Knickfähigkeit der Kette zumindest in eine Knickrichtung ausgehend von der gestreckten Stellung unterbinden, so dass ein Ausknicken beim Ausfahren erschwert wird.

Die Verwendung von Schubketten als Teil eines Antriebssystems einer Slide-Out-Anordnung ist grundsätzlich bekannt. Schubketten können vorteilhaft für die Kraftbeaufschlagungvon Slide-Out-Kästen in Einfahrrichtung und Ausfahrrichtung verwendet werden, da mit ihnen bei anderen Systemen gegebene Nachteile wie Zahnstangen an der Außenseite des Slide-Out-Kastens vermeidbar sind.

Allerdings sind Schubketten typischerweise vergleichsweise schwer, um durch ihr Eigengewicht die Ausknickneigung der Schubketten zu verringern. Die hohe Masse bekannter Schubketten ist bei der

Verwendung als Teil von Slide-Out-Anordnungen problematisch, da hierdurch das Fahrzeugleergewicht erheblich erhöht wird und zudem die Masse der Schubkette im Falle von seitlich vorgesehenen Slide-Out-Anordnungen eine asymmetrische Last für das Fahrzeug darstellt.

### AUFGABE UND LÖSUNG

Aufgabe der Erfindung ist es daher, eine Schubkette zur Verfügung zu stellen, die preisgünstig und relativ leicht ist, jedoch aufgrund der übertragbaren Kraft für die Anwendung bei Slide-Out-Anordnungen geeignet ist. Aufgabe der Erfindung ist es weiterhin, auf Basis dessen auch passende Schubkettenglieder, einen korrespondierenden Schubkettenverbund und ein korrespondierendes Schubkettenmodul zurVerfügung zu stellen. Weiterhin ist Aufgabe der Erfindung, eine vorteilhafte Gestaltung einer Slide-Out-Anordnung sowie eines Fahrzeugs mit einer solchen Slide-Out-Anordnung unter Nutzung der beschriebenen Schubkette zu ermöglichen.

Erfindungsgemäß wird gemäß dem Hauptaspekt der Erfindung eine Schubkette vorgeschlagen, die aus einer Mehrzahl von Schubkettengliedern besteht, die schwenkbeweglich aneinander angebracht sind. Die Schubkettenglieder, die in einem Stauzustand zumindest zum überwiegenden Teil gegenüber einer Ausfahrrichtung verschwenkt sind, können in der genannten Ausfahrrichtung ausgefahren werden, so dass der ausgefahrene und dabei vorzugsweise geradlinig gestreckte Teil der Schubkette in der Lage ist, Druckkräfte zu übertragen und damit insbesondere einen Slide-Out-Kasten gegenüber dem Chassis eines Fahrzeugs in einer Einfahrrichtung und einer Ausfahrrichtung mit der hierfür erforderlichen Kraft zu beaufschlagen.

Die Schubkettengliederdererfindungsgemäßen Schubkette weisen dabei einen besonderen Aufbau auf, wobei dies zumindest für einige Schubkettenglieder gilt, während vorgesehen sein kann, dass andere Schubkettenglieder der gleichen Schubkette einen abweichenden Aufbau aufweisen. Der besondere erfindungsgemäße Aufbau sieht vor, dass die Schubkettenglieder jeweils aus zwei Kettengliedelementen aufgebaut sind, die direkt oder unter Verwendung eines Kopplungselements miteinanderortsfest gekoppelt sind und so gemeinsam die Außenkontordes Schubkettengliedes definieren. Unter einer solchen Definition der Außenkontur wird verstanden, dass mindestens 90%, vorzugsweise mindestens 99%, der Außenfläche des Schubkettengliedes durch die beiden Kettengliedelemente gebildet ist.

Die Kettengliedelemente bilden den Hauptteil der Schubkettenglieder. In einer möglichen Gestaltung sind die Schubkettenglieder ausschließlich aus diesen beiden Kettengliedelementen aufgebaut, wobei diese zur Kopplung miteinander verrastet, verklebt oder verschweißt sein können.

Der einfache Aufbau der Schubkettenglieder, der im Weiteren noch bezüglich Details beschrieben ist, stellt eine kostengünstige Möglichkeit der Herstellung dar. Die Kettengliedelemente können insbesondere als einfache und leichte Kunststoff-Spritzgussteile hergestellt sein. Bei geeigneter Gestaltung reichen die hiermit übertragbaren Kräfte für viele Anwendungsfelder und insbesondere für die Verwendung an einem Slide-Out aus.

Bevorzugt ist es allerdings, wenn ein drittes Element, das Kopplungselement, Teil der Schubkettenglieder ist. Dieses Kopplungselement kann dabei insbesondere in Form eines vorzugsweise metallischen Kopplungsstiftes ausgebildet sein, der in einem Stiftkanal angeordnet ist, der sich durch beide Kettengliedelemente erstreckt. Vorzugsweise ist in einem der Kettengliedelemente eine Durchgangsbohrung und im zweiten Kettengliedelement ein Sackloch vorgesehen, wobei die Durchgangsbohrung und das Sackloch nach Zusammensetzen der beiden Kettengliedelemente miteinander fluchten, so dass hier der Kopplungsstift bei der Montage eingeschoben werden kann.

Der Stiftkanal erstreckt sich vorzugweise in einer Längsrichtung des Schubkettengliedes. Bei ausgefahrener gestreckter Schubkette ist der Stiftkanal somit in Ausfahrrichtung der Schubkette ausgerichtet. Dies ist für eine einfache Montage von Vorteil.

Insbesondere ist es bevorzugt, wenn der Stiftkanal sich in einerVerlaufsrichtung erstreckt, wobei die Kettengliedelemente des Schubkettengliedes bzgl. dieser Verlaufsrichtung durch ihre jeweilige Formgebung zumindest bezüglich einer Relativverlagerungsrichtung und vorzugsweise bezüglich beider Relativverlagerungsrichtung formschlüssig miteinander gekoppelt sind. Dies bedeutet, dass die beiden Kettengliedelemente bereits vor Einfügen des Kopplungsstiftes im aneinander anliegenden Zustand bzgl. der Relativbeweglichkeit auf eine Trennrichtung beschränkt sind und die Relativverlagerung in dieser Trennrichtung durch das Einfügen des Kopplungsstiftes unterbunden wird. Nach Einfügen des Stiftes ist eine zerstörungsfreie Trennung der Kettengliedelemente ohne vorheriges Entfernen des Kopplungsstiftes nicht möglich. Die Verlaufsrichtung des Stiftkanals kann mit der Längsrichtung der Schubkettenglieder übereinstimmen, muss dies aber nicht tun. Grundsätzlich kann eine Schubkette der erfindungsgemäßen Art derart ausgebildet sein, dass die Schubkettenglieder in der Kettenebene gegeneinander in beide Knickrichtungen ausknicken können. Damit eine solche Schubkette bei der Übertragung von Schubkräften nicht ausknickt, ist eine Führung vorzusehen.

Als vorteilhaft wird allerdings eine Gestaltung angesehen, bei der die Schubkettenglieder jeweils eine Außenkontur aufweisen, durch die die Schwenkbeweglichkeit zweier unmittelbar miteinander gekoppelter Schubkettenglieder in der Kettenebene der Schubkette in einer Knickrichtung über die gestreckte Stellung hinaus unterbunden ist und somit auf die entgegengesetzten Klickrichtung beschränkt ist. Eine solche Beschränkt bewirkt, dass ein Ausknicken der Schubkette in eine Richtung unterbunden ist, wodurch im Ergebnis auch wirksam verhindert wird, dass die Schubkette in entgegengesetzte Richtung ausknickt, da jedes Ausknicken der Schubkette zwischen zwei Befestigungspunkten der Schubkette, bspw. am Fahrzeugchassis und am Slide-Out-Kasten, es zwingend erforderlich macht, dass die Schubkette auch in entgegengesetzte Richtung ausknicken kann. Ist ein Ausknicken in einer Richtung unterbunden, so kann die Schubkette somit in keine Richtung in relevantem Maße ausknicken, wenn die an den Enden anliegenden Druckkräfte nicht zu hoch werden. Zusätzlich können die Schubkettenglieder auch durch das Zusammenwirken zweier Schubketten stabilisiert sein, wie im Weiteren noch erläutert wird.

Die Außenkontur der Schubkettenglieder ist zur Erreichung der beschränkten Schwenkbeweglichkeit vorzugsweise derart gestaltet, dass die Stirnenden der Schubkettenglieder in gestreckter Relativanordnung der Schubkettenglieder aneinander zum Anliegen kommen und somit ein Knicken darüber hinaus verhindern.

Vorzugsweise ist darüber hinaus vorgesehen, dass die Schubkettenglieder jeweils eine Außenkontur aufweisen, durch die die Schwenkbeweglichkeit zweier unmittelbar miteinander gekoppelter Schubkettenglieder in der Kettenebene der Schubkette gegenüber einer gestreckten Ausrichtung auf einen Winkel von weniger als 100° beschränkt wird, vorzugsweise auf 90°. Vorzugsweise können also zwei aneinander schwenkbeweglich verbundene Schubkettenglieder gegeneinander zwischen der gestreckten Relativanordnung mit fluchtenden Längsrichtungen und einer um etwa 90° genickten Stellung verschwenken.

Um die Ausknickneigung der Schubkette insbesondere unter hoher Last zu verringern, ist vorzugsweise vorgesehen, dass die hier beschriebene Schubkette nicht als Einzelkette verwendet wird, sondem insbesondere zwei Schubketten vorgesehen sind, die einen gemeinsamen Schubkettenverbund bilden. In nachfolgend noch beschriebenerWeise können diese beiden Schubketten beim Ausfahren eine formschlüssige Verbindung eingehen, so dass sie in Ausfahrrichtung aneinander fixiert sind und dem Schubkettenverbund somit ein ausknickfreies sicheres Ausfahren ermöglichen.

Die Kettengliedelemente einer erfindungsgemäßen Schubkette gemäß dem Hauptaspekt der Erfindung bestehen in oben beschriebener Weise primär aus zwei Kettengliedelementen, ggf. ergänzt um das beschriebene Kopplungselement, insbesondere einen metallischen Kopplungsstift.

Die beiden Kettengliedelemente weisen jeweils eine Kontaktfläche auf, an der das jeweils andere Kettengliedelement flächig anliegt. Um einen besonders guten Halt der Kettengliedelemente aneinander zu bewirken, wird vorgeschlagen, die Kontaktflächen so zu gestalten, dass diese nicht in einer gemeinsamen Ebene liegen. Vorzugsweise liegen von beiden Kontaktflächen maximal 50% im Bereich einer gemeinsamen Hauptebene, während andere Teile der Kontaktflächen hiergegen versetzt sind. Die Kontaktflächen weisen also eine von der Ebene abweichende dreidimensionale Formgebung auf. Ungeachtet der Fügemethode der Kettengliedelemente wie der Verschweißung, Verklebung oder Kopplung mittels eines Kopplungselements wie einem Kopplungsstift oder einer Kopplungsschraube kann eine solche dreidimensionale Gestaltung der Kontaktfläche bewirken, dass ein festerer Halt zwischen den Kettengliedelementen gegeben ist.

Insbesondere können die Kettengliedelemente eine Formgebung aufweisen, durch die sie im zusammengesetzten Zustand gegen eine Relativverlagerung in Längsrichtung der Schubkette formschlüssig gesichert sind. Hierdurch wird erreicht, dass bei einer Belastung der Schubkette auf Zug oder auf Druck die zwischen den Kettengliedelementen auftretenden Kräfte nicht durch das Fügemittel wie die Schweißverbindung oder Klebeverbindung aufgenommen werden müssen und stattdessen sich die Kettengliedelemente unmittelbar aneinander abstützen.

Eine besonders vorteilhafte Gestaltung dessen sieht vor, dass an einem der Kettengliedelemente quer zur Längsrichtung ausgerichtete Stege vorgesehen sind, zu denen korrespondierend das andere Kettengliedelement Nuten aufweist. Im zusammengesetzten Zustand der Kettengliedelemente sind die Stege in den Nuten angeordnet, so dass hier die Kraftübertragung zwischen den Kettengliedelementen in Längsrichtung erfolgen kann. Auch eine vereinfachte Gestaltung mit nur einer Nut und nur einem Steg ist möglich.

Der Antrieb der Schubkette erfolgt idealerweise elektrisch über einen Elektromotor. Dieser Elektromotor kann einzig einer Schubkette oder einem Schubkettenverbund aus zwei Schubketten zugeordnet sein oder zum Antreiben mehrerer Schubkettenverbunde ausgebildet sein, wie im Weiteren noch erläutert wird.

Die Kraftübertragung auf die Schubkette erfolgt vorzugsweise mittels eines Antriebszahnrades, welches mit einer Zahnstruktur an den Schubkettengliedern kämmt und die Schub kette dadurch in Ausfahrrichtung oder Einfahrrichtung antreibt. Vorzugsweise weist die Schubkette auf einer Antriebsseite eine solche Verzahnung auf, die durch Zahnstrukturen an der Antriebsseite der Schubkettenglieder gebildet wird. Insbesondere vorzugsweise ist dabei vorgesehen, dass kein Zahn der Zahnstruktur durch zwei benachbarte Schubkettenglieder gebildet wird. Vorzugsweise weisen die Schubkettenglieder demnach ungeteilte, einheitlich den Schubkettengliedern zugeordnete Zähne auf.

Die Antriebsseite, an der die Verzahnung vorzugsweise vorgesehen ist, ist parallel zur Kettenebene der Schubkette ausgerichtet. Diese Anordnung gestattet es, dass zwei Schubketten, die gemeinsam einen Schubkettenverbund bilden, mit einem gemeinsamen Zahnrad oder zwei auf einer gemeinsamen Antriebswelle vorgesehenen Zahnrädern angetrieben werden können.

Damit die Schubkette friktionsarm ausgefahren und eingefahren werden kann, weist sie vorzugsweise eine Gleitfläche auf, mit der sie bestimmungsgemäß vor dem Ausfahren an einer Wandung eines Gehäuses eines Schubkettenmoduls anliegt. Die Gleitfläche ist vorzugweise weitgehend oder vollständig frei von Stufen oder Erhebungen. Vorzugsweise ist sie vollständig plan ausgebildet. Die Gleitfläche ist vorzugsweise der Antriebsseite gegenüberliegend angeordnet, so dass die Anpresskraft des Zahnrades an der Zahnstruktur die Schubkette mit der Gleitfläche gegen eine Innenfläche des besagten Gehäuses drückt.

Die Schubkettenglieder, insbesondere deren zwei Kettengliedelemente, können in für Schubketten üblicher Weise als Metallteile, beispielsweise aus Stahl, hergestellt sein. Bei einer solchen metallischen Gestaltung wird es als besondere vorteilhaft angesehen, wenn die Kettengliedelemente aus Leichtmetall, wie Aluminium, hergestellt sind, aber auch eine Gestaltung aus Stahl ist möglich. Insbesondere erfolgt die Herstellung als Metallteil in Form von Metallfeingussteilen.

Wie eingangs bereits erläutert wurde, ist es allerdings bevorzugt, wenn die Schubkettenglieder der Schubkette oder zumindest einige der Schubkettenglieder als Kunststoffteile hergestellt sind, wobei je nach Anforderung reine Kunststoffteile, beispielsweise aus Polyoxymethylen, ausreichend sein können. Insbesondere vorzugsweise wird als Material für die Schubkettenglieder jedoch faserverstärkter Kunststoff gewählt. Im Falle von faserverstärktem Kunststoff ist insbesondere vorzugsweise eine Gestaltung mit glasfaserverstärktem Kunststoff möglich. Insbesondere handelt es sich um glasfaserverstärkten Kunststoff, bei dem der Kunststoffanteil durch Polyoxymethylen gebildet wird und der Glasfaseranteil an einer Gesamtmasse der Kettengliedelemente mindestens 20% beträgt, vorzugsweise mindestens 30%.

Die beschriebenen Gestaltungen der Kettengliedelemente aus Kunststoff oder Metall müssen für eine Schubkette nicht einheitlich sein. Es kann von Vorteil sein, wenn die Schubkette Schubkettenglieder unterschiedlichen Typs umfasst, die insbesondere an die jeweils spezifischen Anforderungen im Betrieb angepasst sind. Insbesondere kann es sich um Schubkettenglieder handeln, von denen mindestens eines zum überwiegenden Teil aus Kunststoff besteht und von denen mindestens eines zum überwiegenden Teil aus Metall besteht, insbesondere aus Aluminium. Eine mögliche vorteilhafte Gestaltung der Schubkette sieht vor, dass im eingefahrenen Zustand und im ausgefahrenen Zustand, in denen das System den überwiegenden Teil der Zeit verharrt, das Antriebszahnrad im Eingriff mit einer metallischen Verzahnung steht, während bei der Überführung vom eingefahrenen Zustand zum ausgefahrenen Zustand das Zahnrad im Eingriff mit Kunststoffverzahnungen der Kunststoff- Schubkettenglieder steht.

Wie eingangs beschrieben, weisen zumindest einige Schubkettenglieder der erfindungsgemäßen Schubkette einen Aufbau auf, bei dem das Schubkettenglied zum weit überwiegenden Teil oder vollständig aus zwei Kettengliedelementen besteht, welche die Außenkontur des Schubkettengliedes definieren.

Insbesondere vorzugsweise werden auch die Gelenke, mittels derer zwei aufeinander folgende Schubkettenglieder schwenkbar aneinander angelenkt sind, vollständig durch diese beiden Kettengliedelemente gebildet.

Besonders bevorzugt ist ein Aufbau, bei dem von zwei aufeinander folgenden und baugleichen Schubkettenglieder eines der Schubkettenglieder derart ausgebildet ist, dass die Kettengliedelemente dieses Schubkettengliedes ein gabelförmiges Gelenkaußenteil mit zwei aufeinander zu weisenden Schwenkführungsgeometrien bilden. Beim zweiten der beiden Schubkettenglieder ist vorgesehen, dass dessen Kettengliedelemente oder eines der beiden Kettengliedelemente ein Gelenkinnenteil bildet, welches zwei voneinander weg weisende Schwenkführungsgeometrien aufweist, die mit den Schwenkführungsgeometrien des Gelenkaußenteils des benachbarten Schubkettengliedes zur Erzielung der Gelenkfunktion im Eingriff stehen.

Die Gelenke werden bei einer solchen Gestaltung also alleine durch die beiden Kettengliedelemente gebildet. Zusätzliche Elemente wie bspw. eine Stahlachse sind nicht erforderlich.

Zwar ist es möglich, die Schwenkführungsgeometrien stark zu vereinfachen, indem beispielsweise die Schwenkführungsgeometrien am Gelenkaußenteil als schlichte zylindrische Ausnehmungen und die Schwenkführungsgeometrien am Gelenkinnenteil als angeformte Achsabschnitte ausgebildet sind. Vorteilhaft sind jedoch Schwenkführungsgeometrien, die eine größere Kontaktfläche ermöglichen. Insbesondere als vorteilhaft wird eine Gestaltung angesehen, bei der die Schwenkführungsgeometrien des Gelenkaußenteils und/oder des Gelenkinnenteils über mindestens einen umlaufenden Führungssteg verfügen, vorzugsweise über eine Mehrzahl von konzentrischen umlaufenden Führungsstegen. Insbesondere vorzugsweise sind die zusammenwirkenden Schwenkführungsgeometrien am Gelenkaußenteil und am Gelenkinnenteil jeweils mit mindestens einem umlaufenden Führungssteg versehen. Die Innenflächen bzw. Außenflächen dieser umlaufenden Führungsstege bilden die Kontaktflächen, über die die auf die Schubkette wirkenden Druckkräfte oder Zugkräfte zwischen den Schubkettengliedern übertragen werden.

Also besonders zweckmäßig haben sich Gestaltungen der Schwenkführungsgeometrien erwiesen, bei denen mindestens eine der Schwenkführungsgeometrien gemeinsam durch beide Kettengliedelemente des jeweiligen Schubkettengliedes gebildet werden. Hierdurch kann erreicht werden, dass der Zusammenhalt beider Kettengliedelemente zusätzlich durch ihren gemeinsamen Eingriff mit dem folgenden benachbarten begünstigt wird. Auch ist eine Krafteinleitung in die Schubkettenglieder möglich, die unmittelbar an beiden Kettengliedelementen erfolgt. Im Falle von Schwenkführungsgeometrien mit umlaufenden Führungsstegen ist es besonders vorteilhaft, wenn ein solcher Führungssteg durch beide Kettengliedelemente gemeinsam gebildet wird.

Wie bereits erläutert, findet eine erfindungsgemäße Schubkette vorzugsweise in einem Verbund aus zwei Schubketten Verwendung, deren Kettenebene übereinstimmt, die jedoch im Falle einer nur unidirektionalen Knickfähigkeit in gegenläufige Richtungen knickfähig sind. Beim synchronen Ausfahren beider Schubketten gelangen diese in Kontakt miteinander und stützen sich gegenseitig. Mit einem solcher Verbund von zwei Schubketten ist eine hohe Knickstabilität erzielbar.

Bei einer erfindungsgemäßen Schubkette kann zu diesem Zweck zusätzlich vorgesehen sein, dass mindestens einige der Schubkettenglieder einen seitlichen Kopplungskörper aufweisen, der vorzugsweise einstückiger Teil eines der Kettengliedelemente ist. Der Kopplungskörper kann aber auch anders ausgebildet sein, insbesondere indem er durch die beiden Kettengliedelemente gemeinsam gebildet wird.

Korrespondierend zu einem solchen Kopplungskörper ist die Schubkette bzw. eine hierzu baugleiche oder spiegelbildliche zweite Schubkette des gleichen Schubkettenverbundes zur Aufnahme solcher Kopplungskörper ausgebildet, so dass durch die Aufnahme der Kopplungskörper der anderen Schubkette des Schubkettenverbundes eine formschlüssige Kopplung hergestellt wird, die dem Gleichlauf der Schubketten dient und eine Trennung der Schubketten voneinander vorzugsweise formschlüssig verhindert.

Insbesondere kann hierfür vorgesehen sein, dass zwei unmittelbar miteinanderschwenkbarverbundene Schubkettenglieder der Schubkette einen seitlichen Aufnahmeraum für einen Kopplungskörper definieren, wobei dieser Aufnahmeraum derart ausgebildet ist, dass er durch Verbringung der beiden Schubkettenglieder in eine gestreckte Ausrichtung mit fluchtenden Längsrichtungen partiell verschlossen wird, so dass ein derweil in den Aufnahmeraum eingefahrenen Kopplungskörper einer anderen Schubkette nicht mehr quer zu einer Ausfahrrichtung herausgezogen werden kann.

Das Wirkkonzept hierbei sieht vorzugsweise vor, dass die beim Ausfahren üblicherweise stattfindende partielle Formänderung der Schubkette aus einer gekrümmten Form in eine gestreckte Form genutzt wird, indem diese Formänderungdurch die damit einhergehende Relativverlagerungzweier benachbarter Schubkettenglieder einer Schubkette verwendet wird, um den Aufnahmeraum zu schließen, so dass ein beim Zusammenführen der Schubketten hier eingerückter Kopplungskörper formschlüssig im Aufnahmeraum gesichert wird, bis die entsprechenden Schubkettenglieder bei einem späteren Einfahren wieder relativ zueinanderverschwenken und den Aufnahmeraum hierdurch wieder öffnen.

Ein weiteres Zusammenwirken zweier unmittelbar benachbarter Schubkettenglieder der gleichen Schubkette ist vorzugsweise dadurch vorgesehen, dass die Schubkettenglieder eine Formgebung einer in Ausfahrrichtung weisenden Stirnfläche und eine Formgebung einer in Einfahrrichtung weisenden Stirnfläche aufweisen, die aufeinander so abgestimmt sind, dass zumindest im gestreckten Zustand der Schubkettenglieder ein Formschluss orthogonal zur Ausfahrrichtung bewirkt wird.

Dies bedeutet, dass zumindest in der gestreckten Ausrichtung der Schubkette eines der Kettenglieder mit dem vorangehenden oder nachfolgenden Kettenglied derart in Eingriff gebracht wird, dass die Relativverlagerung in Richtung der Schwenkachse zwischen den Schubkettengliedern unterbunden ist. Insbesondere kann vorgesehen sein, dass die beiden zusammenwirkenden Stirnflächen der beiden Schubkettenglieder derart geformt sind, dass der Formschluss orthogonal zur Ausfahrrichtung in gestreckten Zustand der Schubkettenglieder gegeben ist und durch Knicken der Schubkettenglieder in der Kettenebene der Schubkette zum Zwecke der Montage / Demontage aufgehoben werden kann. Somit steht der in der gestreckten Ausrichtung gegebenen Formschluss derSchubkettenglieder einer Montage der Schubkette nicht entgegen. Die Montage der Schubkette und insbesondere der Schubkettenglieder aneinander erfolgt in angewinkelter Stellung.

Wenngleich der Hauptaspekt der Erfindung darin liegt, Schubkettenglieder einer Schubkette primär aus zwei die Außenkontur definierenden Kettengliedelementen herzustellen, insbesondere aus Kettengliedelementen aus Kunststoff, ggf. ergänzt um ein Kopplungselement, betrifft die Erfindung gemäß einem Nebenaspekt unabhängig davon auch eine Schubkette, die aus einer Mehrzahl von Schubkettengliedern besteht, die schwenkbeweglich aneinander angebracht sind und bei der die Schubkettenglieder jeweils zwei Kettengliedelemente aufweisen, die nicht alleine die Außenkontur definieren müssen, sondern potentiell ergänzt sind um ein außenkonturbildendes drittes oder weiteres Bauteil.

Die beiden Kettengliedelemente sind gemäß diesem Nebenaspekt der Erfindung zur Bildung des Schubkettengliedes miteinander verbunden und bilden gemeinsam mindestens folgende Komponenten des Schubkettengliedes, nämlich ein Gelenkaußenteil mit zwei aufeinander zu weisenden Schwenkführungsgeometrien und ein Gelenkinnenteil mit zwei voneinander weg weisenden Schwenkführungsgeometrien zur Zusammenwirkung mit dem Gelenkaußenteil des jeweils nächsten Schubkettengliedes, sowie eine Tragstruktur, die Druckkräfte zwischen dem Gelenkinnenteil und dem Gelenkaußenteil eines Schubkettengliedes aufnehmen kann.

Es sind gemäß diesem Erfindungsaspekt somit die für die Verkettung der Schubkettenglieder und für die Übertragung von Druckkräften erforderlichen Komponenten alleine durch die beiden vorzugsweise aus Kunststoff hergestellten Kettengliedelemente gebildet. Weitere Bauteile können für weitere Funktionen vorhanden sein, bspw. zur Bildung von Kopplungselementen oderVerzahnungen.

Die oben zum Hauptaspekt der Erfindung genannten optionalen Maßnahmen der Erfindung sind auch in Hinblick auf diesen Nebenanspruch verwendbar. Insbesondere die oben beschriebenen Merkmale zur Gestaltung der Kopplungsteilelemente aus Kunststoff oder faserverstärktem Kunststoff sowie zur Gestaltung der Schwenkgelenke sind ebenso bei einer Gestaltung der Schubkette gemäß dem beschriebenen Nebenaspekt der Erfindung nutzbar.

Die Erfindung betrifft neben einer Schubkette als Ganzer auch ein einzelnes Schubkettenglied einer solchen Kette, welches zur Verwendung als Teil einer solche Schubkette vorgesehen ist. In Übereinstimmung mit dem Hauptaspekt der Erfindung weist das erfindungsgemäße Schubkettenglied zwei Kettengliedelemente auf, die direkt oder unter Verwendung eines Kopplungselements miteinander ortsfest gekoppelt sind und gemeinsam die Außenkontor der Kette definieren.

Die oben in Hinblick auf die Gestaltung und Kopplung der beiden Kettengliedelemente beschriebenen Teilaspekte gelten natürlich auch für das einzelne Schubkettenglied.

Ebenfalls von der Erfindung umfasst ist ein Schubkettenverbund, wie er oben schon erwähnt ist. Ein solcher Schubkettenverbund weist mindestens und vorzugsweise genau zwei Schubketten auf. Diese beiden Schubketten können aus einer Staulage in einen Nutzzustand ausgefahren werden, wobei sie dadurch derart angeordnet werden und miteinander wechselwirken, dass sich die ausgefahrenen Teile der jeweiligen Schubketten jeweils aneinander abstützen. Die Schubketten sind dabei von oben beschriebener Art und vorzugsweise baugleich oder spiegelbildlich zueinander aufgebaut.

Insbesondere können die mindestens zwei Schubketten des Schubkettenverbundes aufeinander derart abgestimmt sein, dass in der oben beschriebenen Weise die Kopplungskörper einer der Schubketten und korrespondierende Aufnahmeräume der anderen Schubkette beim Ausfahren der Schubketten einen Formschluss herstellen. Im einfachsten Falle wirkt dieser Formschluss nur in Ausfahrrichtung und begünstigt somit den Gleichlauf der Schubketten und verringert dadurch mittelbar die Gefahr eines Ausknickens des Schubkettenverbundes. In vorteilhafter Gestaltung wirkt der Formschluss quer zur Ausfahrrichtung und verhindert dadurch wirksam eine Trennung der ausgefahrenen Teile der Schubketten voneinander.

Ebenfalls von der Erfindung umfasst ist ein Schubkettenmodul. Dieses umfasst neben einem Schubkettenverbund der beschriebenen Art mit mindestens zwei Schubketten auch ein Antriebszahnrad zum gemeinsamen Ausfahren der Schubketten. Insbesondere weist das Modul ein einheitliches Gehäuse auf, welches Schubkettenspeicher zur Aufnahme der beiden Schubketten aufweist.

Das Schubkettenmodul kann zusätzlich einen Fügebereich aufweisen, im Bereich dessen die beiden Schubketten beim Ausfahren gefügt werden. Der Fügebereich ist vorzugsweise miteinander gegenüberliegende Führungsflächen vorgesehen, mittels derer die Schubkettenglieder der Schubketten aufeinander zu kraftbeaufschlagt werden. Insbesondere kann dies dem Zweck dienen, die oben beschriebenen Kopplungskörper und die entsprechenden Ausnehmungen der anderen Schubkette einzufügen.

Die Führungsflächen weisen vorzugsweise jeweils eine aus Kunststoff gefertigte Gleitfläche auf, die in Richtung der Schubketten weist. Diese Gleitfläche dient der Kraftbeaufschlagung der Kettengliedelemente aufeinander zu. Da für die Kopplung ein gewisser Kraftaufwand erforderlich ist, tritt ein Verschleiß der Gleitflächen bei häufigem Einfahren und Ausfahren ein. Um die Funktionstauglichkeit einfach aufrecht erhalten zu können, kann eine Messvorrichtung zur Messung eines Verschleißzustandes der Führungsflächen vorgesehen sein, insbesondere zur Messung des Verschleißzustandes der Gleitfläche aus Kunststoff.

Das Schubkettenmodul kann auch das Antriebssystem oder zumindest einen Teil dessen zur Verfügung stellen. So kann insbesondere ein Antriebszahnrad und dessen Wellenlagerung Teil des Schubkettenmoduls sein, wobei es sich insbesondere um ein Antriebszahnrad handelt, welches mit Verzahnungen an beiden Schubketten gleichzeitig kämmt. Ein Elektromotorzum Antreiben des mindestens einen Antriebszahnrades ist vorzugsweise ebenfalls Teil des Antriebsmoduls. Es ist jedoch auch möglich, dass das Schubkettenmodul lediglich eine Wellenkupplung zurVerfügung stellt und über eine nicht dem Schubkettenmodul zugehörige Antriebswelle angetrieben wird, die gleichzeitig auf mehrere Schubkettenmodule wirkt und diese dadurch synchron antreibt.

Ein Antriebssystem, welches eine Schubkette der beschriebenen Art umfasst, insbesondere einen Schubkettenverbund oder ein Schubkettenmodul der beschriebenen Art, kann in vielen Anwendungsfeldern verwendet werden. Insbesondere jedoch ist die vorgeschlagene Bauweise mit einfach herstellbaren und montierbaren Schubkettengliedern, die sich sehr gut als Kunststoffteil herstellen lassen, für Bereiche geeignet, bei denen die Masse des Antriebssystems eine große Rolle spielt. Dies ist beispielsweise bei Fahrzeugen der Fall. Es wird daher als vorteilhaft angesehen, wenn eine Slide-Out-Anordnung für ein Fahrzeug, insbesondere für einen Wohnanhänger oder ein Wohnmobil, in der beschriebenen Art gestaltet ist, wobei vorzugsweise zumindest ein Teil der Schubkettenglieder zumindest zum Teil aus Kunststoff hergestellt ist.

Bei einer solchen Slide-Out-Anordnungsind eine fahrzeugseitige Baugruppe und eine slide-out-seitige Baugruppe vorgesehen, die zum Zwecke des Ausfahrens und Einfahrens eines Slide-Out-Kastens gegeneinander verlagert werden, nämlich aufeinander zu und voneinander weg verlagert werden.

Zwischen diesen Baugruppen ist vorzugsweise mindestens eine Schubkette und insbesondere ein Schubkettenverbund der beschriebenen Art vorgesehen, wobei vorzugsweise mehrere Schubkettenverbünde vorgesehen sind, insbesondere vorzugsweise vier, nämlich jeweils ein oberer und ein unterer Schubkettenverbund an jeder Seite des Slide-Out-Kastens.

Insbesondere kann das Antriebssystem dabei derart an den genannten Baugruppen angebracht sein, dass durch Ausfahren des mindestens einen Schubkettenverbundes der Slide-Out-Kasten eingefahren wird und durch Einfahren des Schubkettenverbundes der Slide-Out-Kasten ausgefahren wird.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1A und 1B zeigen ein Wohnmobil mit einem Slide-Out-Kasten.
Fig. 2 zeigt den Slide-Out-Kasten in einer Seitenansicht mitsamt dem hierfür vorgesehenen Antriebssystem.
Fig. 3 zeigt ein Schubkettenmodul des Antriebssystems gemäß Fig. 2.
Fig. 4 zeigt einen Schubkettenverbund des Schubkettenmoduls gemäß Fig. 3.
Fig. 5A bis 5C zeigen ein einzelnes Schubkettenglied der Schubketten des Schubkettenverbundes in verschiedenen Perspektiven.
Fig. 6 verdeutlicht den Aufbau des Schubkettengliedes aus zwei Kettengliedelementen und einem Kopplungselement.
Fig. 7A und 7B zeigen die beiden Kettengliedelemente und deren Kontaktflächen.
Fig. 8A und 8B zeigen eine zur Fig. 7A und 7B alternative Formgebung der Kontaktflächen.

### DETAILLIERTE BESCHREIBUNG DER AUSFÜHRUNGSBEISPIELE

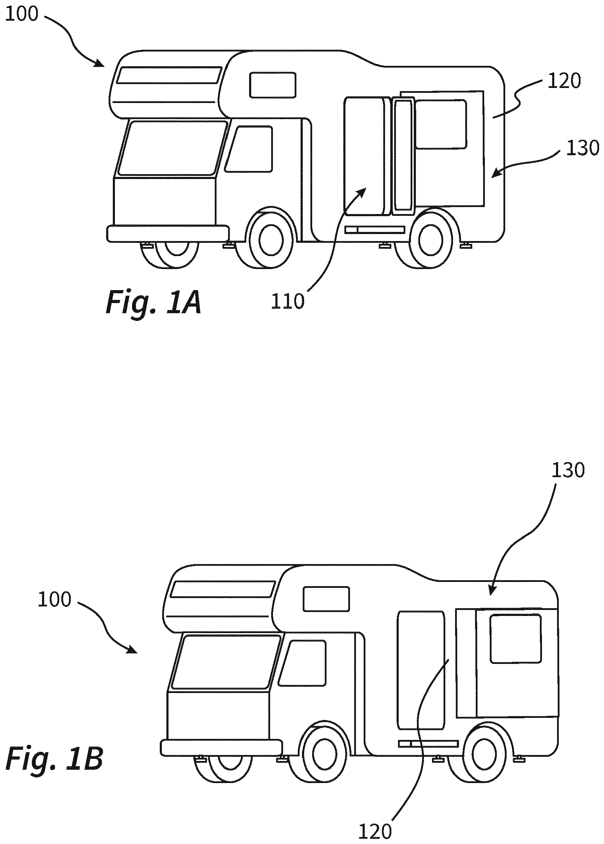

Fig. 1A und 1B zeigen ein Fahrzeug 100, vorliegend ein Wohnmobil, dessen Fahrzeuginnenraum 110 bei stehendem Fahrzeug 100 dadurch vergrößert werden kann, dass ein Slide-Out-Kasten 130 ausgefahren wird, wie in Fig. 1B gezeigt. Dieser Slide-Out-Kasten 130 ist in einer Slide-Out-Aussparung einer Seitenwand 120 des Fahrzeugs 100 verschieblich gelagert. Zum Zwecke des Einfahrens und Ausfahrens des Slide-Out-Kastens 130 findet ein Antriebssystem 150 Verwendung.

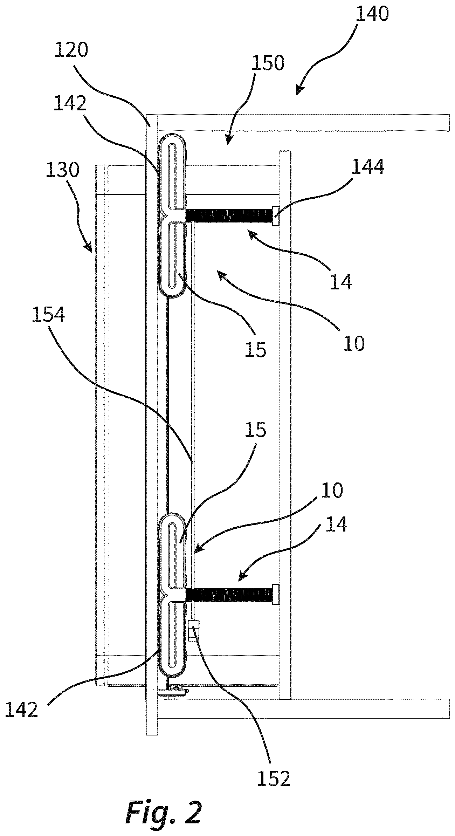

Fig. 2 zeigt die die Slide-Out-Anordnung 140, bestehend aus dem Slide-Out-Kasten 130 und dem Antriebssystem 150. Das Antriebssystem 150 umfasst auf beiden Seiten des Slide-Out-Kastens 130 jeweils zwei Schubkettenmodule 10. Auf jeder Seite des Slide-Out-Kasten 130 ist ein gemeinsamer Elektromotor 152 vorgesehen, der über eine Antriebswelle 154 im Eingriff mit Antriebszahnrädern 16 beider Schubkettenmodule 10 auf der jeweiligen Seite steht, so dass Schubkettenverbunde 14 beider Schubkettenmodule 10 hierüber synchron ausfahrbar sind.

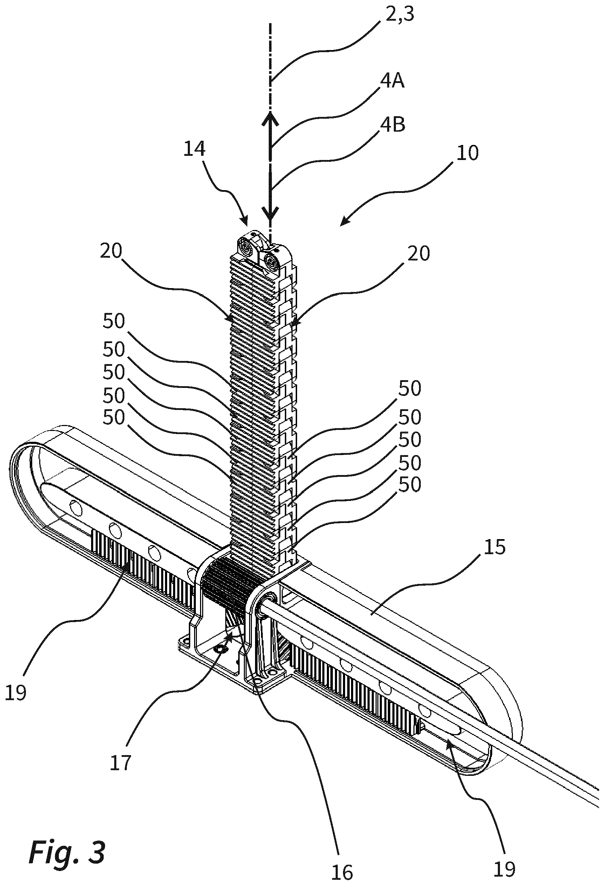

Fig. 3 zeigt ein Schubkettenmodul 10 in separater Darstellung. Die Schubkettenmodule 10 weisen jeweils ein Modulgehäuse 15 auf, das einen Schubkettenspeicher 19 fürjede der beiden Schubketten 20 bereitstellt. Beim Ausfahren der Schubketten 20 werden diese in einem Fügebereich 17 zusammengeführt und hier miteinanderverbunden, um von hieraus als gekoppelter Schubkettenverbund 14 ausgefahren zu werden. Die Schubketten 20 werden niemals vollständig ausgefahren. Vorzugsweise befinden sie sich selbst in einer ausgefahrenen Endlage der Schubketten 20 jeweils noch einzelnen Schubkettenglieder in den jeweiligen Schubkettenspeichern 19. Soweit in dieser Beschreibung das Ausfahren der Schubketten beschrieben ist, meint dies entsprechend ein partielles Ausfahren.

Das Modulgehäuse 15 des Schubkettenmoduls 10 ist in der aus Fig. 2 ersichtlichen Weise an der Innenseite der Seitenwand 120 befestigt. Das Modulgehäuse 15 stellt somit eine fahrzeugseitige Baugruppe 142 des Schubkettenmoduls 10 dar. Das distale Ende des Schubkettenverbundes 14 stellt die gegenüberliegende slide-out-seitige Baugruppe 144 dar. Werden die Schubketten 20 ausgefahren, so verursacht dies ein Einfahren des Slide-Out-Kastens 130. Werden die Schubketten 20 eingefahren, also partiell in den jeweiligen Schubkettenspeicher 19 verlagert, so verursacht dies ein Ausfahren des Slide-Out-Kastens 130.

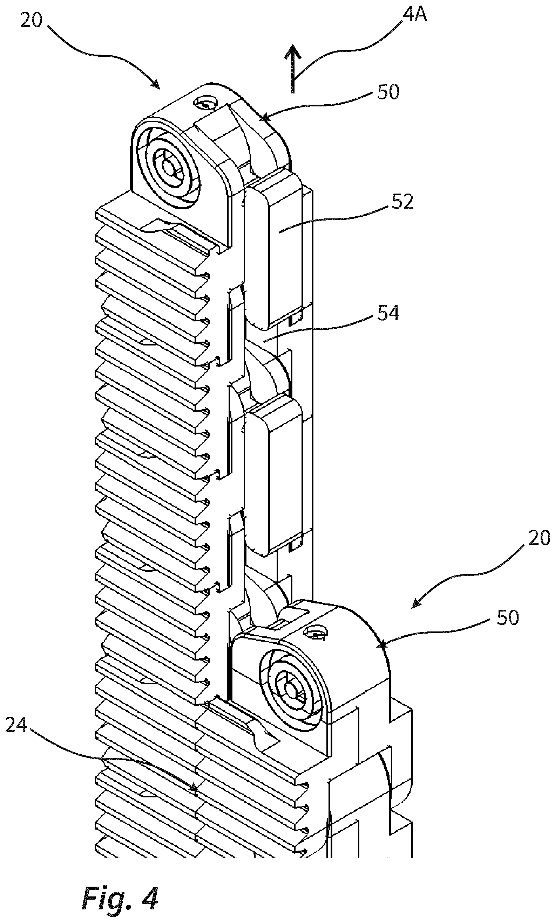

Die Schubketten 20 selbst bestehen jeweils aus einem Strang von verketteten Schubkettengliedern 50, wie anhand der Fig. 3 und insbesondere die Fig. 4 zu ersehen ist. Die Schubkettenglieder50 weisen auf einer in Fig. 3 und 4 nach vorne weisenden Antriebsseite 55jeweils eine Verzahnung 24 auf. Die Antriebszahnräder 16, die über die gemeinsame Antriebswelle 154 angetrieben sind, stehen jeweils im Eingriff mit den Verzahnungen 24 beider zu einem Schubkettenverbund 14 gehörenden Schubketten 20. Auf diese Weise können die beiden Schubketten vollständig synchron ausgefahren und wieder eingefahren werden.

Fig. 4 zeigt den Schubkettenverbund 14, wobei einige Schubkettenglieder50 zum Zweck der Veranschaulichung ausgeblendet wurden. Es ist hier insbesondere zu ersehen, dass die Schubketten 20 in ihrem bereits ausgefahrenen Bereich aufeinander zu weisende Kopplungskörper 52 aufweisen und dass im gestreckten Zustand der Schubkette Aufnahmeräume 54 zur Aufnahme solcher Kopplungskörper 52 vorgesehen sind.

Beim Ausfahren der Schubketten 20 werden im Schubkettenspeicher 19 gelagerte Teil der jeweiligen Schubketten in den Fügebereich 17 geführt und hier um 90 Grad umgelenkt. In dieser Phase der Umlenkung fahren die Kopplungskörper 52 an beiden Schubketten 20 in die noch offenen Aufnahmeräume 54 der jeweils anderen Schubkette ein und verhaken sich somit reißverschlussartig. Während der dann fortgesetzten gemeinsamen und parallelen Bewegung in Ausfahrrichtung sind die Schubketten dann gegen eine Trennung quer zur Ausfahrrichtung gesichert. Zusätzlich sind die Schubketten 20 auch gegen eine Verschiebung gegeneinander in Ausfahrrichtung gesichert. Somit sind die bereits ausgefahrenen Anteile der Schubketten 20 fest miteinander verbunden und sind zur Übertragung von Druckkräften gut geeignet. Bei den hier beschriebenen üblichen Lastsituationen, insbesondere also beim Einfahren und Ausfahren des Slide-Out-Kastens 130, ist kein Ausknicken zu befürchten.

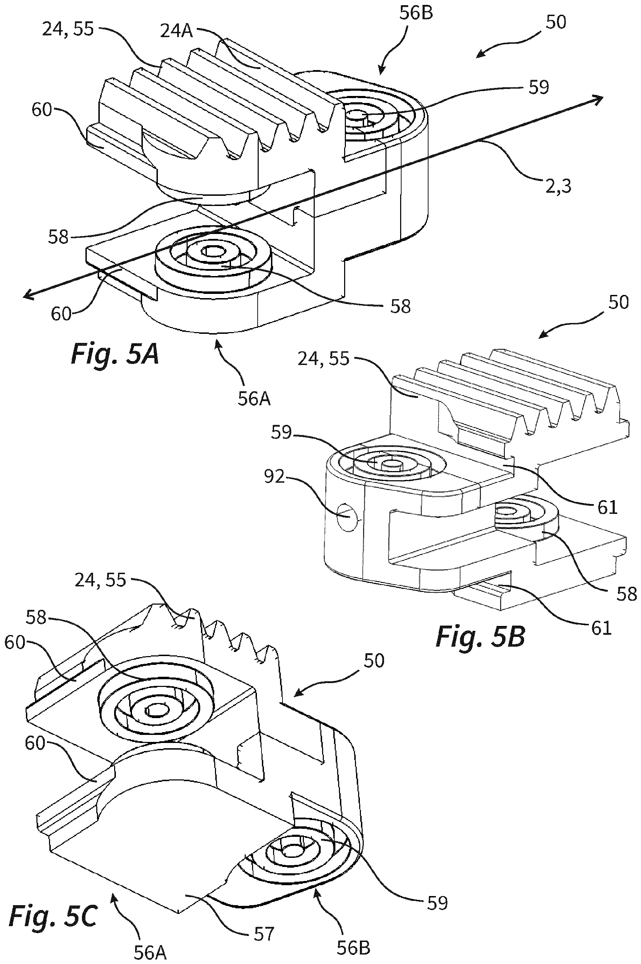

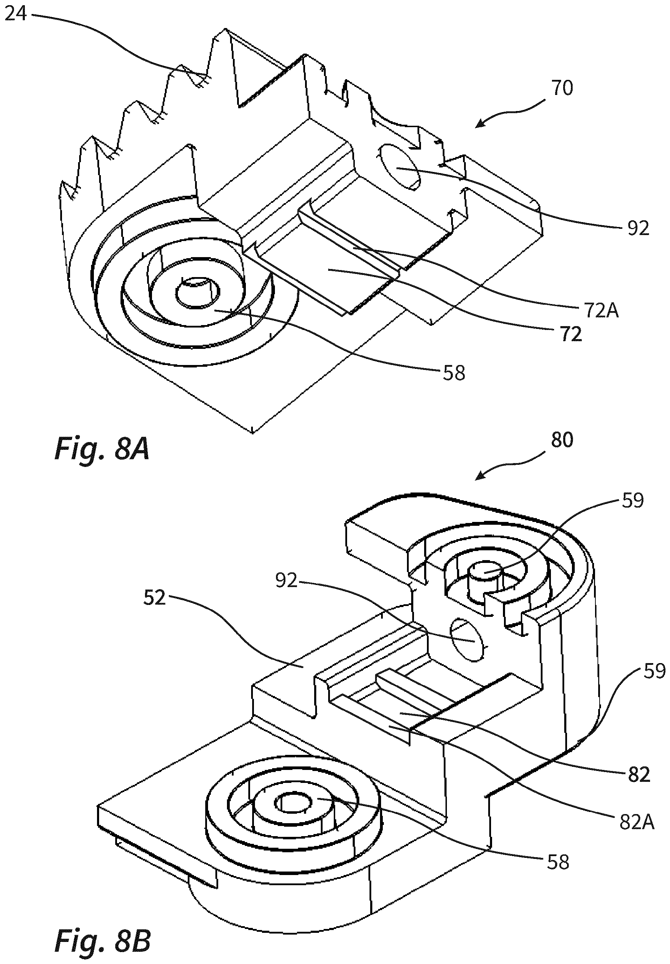

Anhand der Fig. 5A bis 8C wird der Aufbau der einzelnen Schubkettenglieder erläutert.

Fig. 5A bis 5C zeigen ein einzelnes Schubkettenglied 50 in verschiedenen Perspektiven. Das Schubkettenglied 50 weist bezogen auf seine Längsrichtung 2 ein erstes Ende auf, an dem ein gabelartiges Gelenkaußenteil 56A ausgebildet ist. Am gegenüberliegenden zweiten Ende ist korrespondierend ein Gelenkinnenteil 56B ausgebildet.

Das Gelenkaußenteil 56Averfügt über zwei aufeinander zu weisende Schwenkführungsgeometrien 58, die jeweils durch zwei kreisförmige Führungsstege gebildet sind. Das Gelenkinnenteil 56B verfügt hierzu korrespondierend über zwei voneinander wegweisende Schwenkführungsgeometrien 59, die jeweils einen kreisförmigen Führungssteg aufweisen. Die Schwenkführungsgeometrien 58, 59 sind dafür ausgebildet, zur Herstellung der Gelenkfunktion ineinanderzugreifen. Durch die beschriebenen Führungsstege wird dabei eine vergleichsweise große Kontaktfläche zur Verfügung gestellt, die für die Übertragung von hohen Druck- und Zugkräften geeignet ist.

Die Stirnseiten der Schubkettenglieder 50 sind derart geformt, dass sie ein Einknicken von zwei benachbarten Schubkettengliedern 50 aus der gestreckten Stellung nur in eine Knickrichtung gestatten und in die entgegengesetzte Knickrichtung unterbinden.

Weiterhin sind die Stirnseiten der Schubkettenglieder mit einer Formgebung ausgestattet, durch die sich benachbarte Schubkettenglieder50 stützen. An einem Ende des Schubkettengliedes 50, vorliegend an dem Ende des gabelförmigen Gelenkaußenteils 56A, sind zwei Stege 60 vorgesehen, die sich in der Kettenebene erstrecken. Korrespondierend hierzu sind am anderen Ende des Schubkettengliedes 50, vorliegend also an dem Ende des Gelenkinnenteils 56B, zwei Nuten 61 vorgesehen. In einer angewinkelten Position der Schubkettenglieder 50 zueinander, die auch die Montagestellung der Schubkettenglieder 50 ist, sind die Stege 60 und die Nuten 61 voneinander beabstandet, so dass diese Strukturen der Montage nicht entgegen stehen.

Bei Einknicken der Schubketten 20 im Fügebereich 17 jedoch gelangen die Stege 60 in Eingriff mit den Nuten 61, so dass das gabelförmige Gelenkaußenteil 56A wirksam davon abgehalten wird, sich unter dem Eindruck der anliegenden Kräfte aufzubiegen.

Anhand der Fig. 5A bis 5C sind auch die Antriebsseite mit der Verzahnung 24 sowie die gegenliegende plane Gleitfläche 57 zu erkennen.

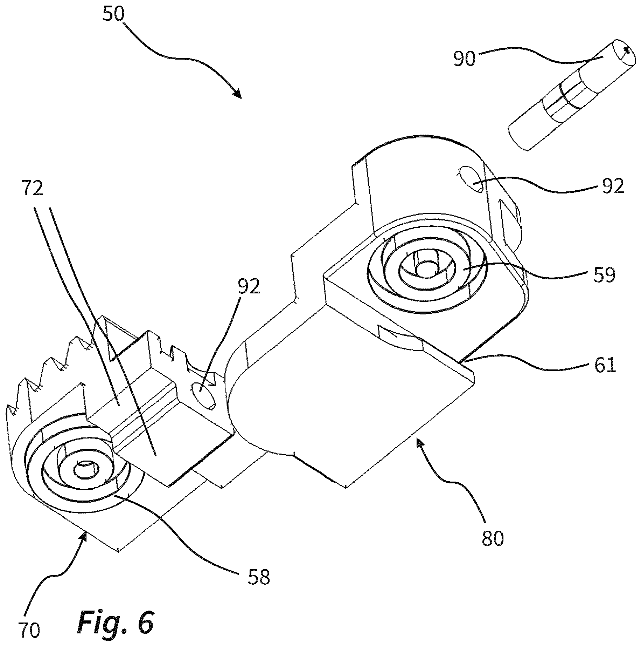

Fig. 6 verdeutlicht den Aufbau der Schubkettenglieder 50. Ein jedes Schubkettenglied 50 weist als Hauptbestandteile zwei Kettengliedelemente 70, 80 auf. Die beiden Kettengliedelemente 70, 80 sind vorzugsweise als Kunststoffteile ausgebildet, insbesondere als Teil auf faserverstärktem Kunststoff.

Die Kettengliedelemente 70, 80 definieren die Außenkontur des Schubkettengliedes 50. Die zuvor beschriebenen Funktionsbereiche der Außenkontur, die die Verzahnung 24 bilden, die die Nuten 61 und Stege 60 zur formschlüssigen Kopplung bereitstellen und die die Gelenkfunktion über die Schwenkführungsgeometrien 58, 59 ermöglichen, sind jeweils an einem oder beiden der Kettengliedelemente 70, 80 vorgesehen.

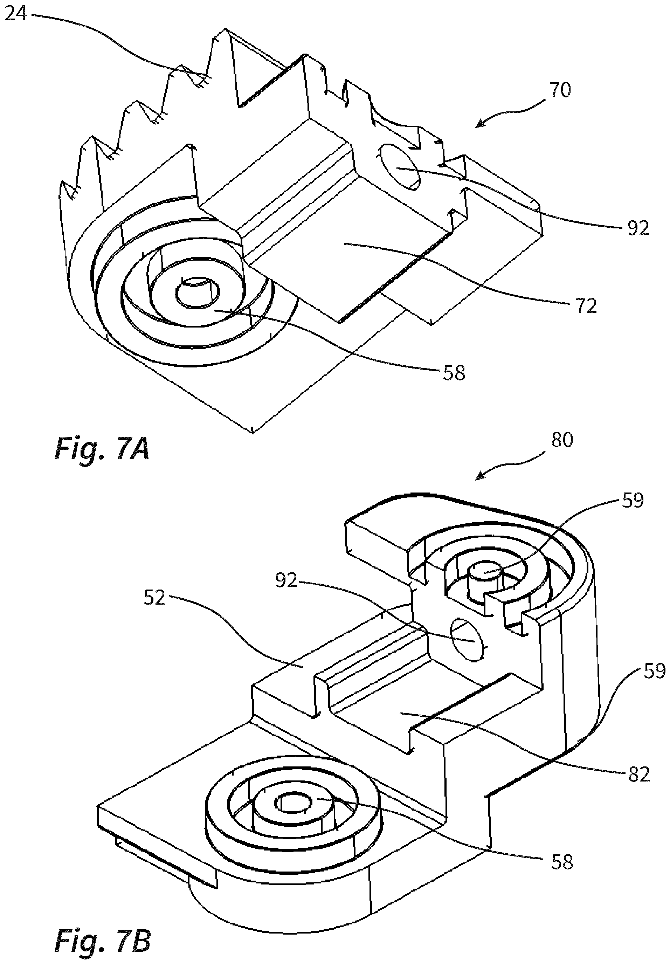

In den Fig. 7A und 7B sind die beiden Kettengliedelemente 70, 80 jeweils isoliert dargestellt, wobei jeweils die Kontaktflächen 72, 82 erkennbar sind, im Bereich derer die Kettengliedelemente 70, 80 im montierten Zustand aneinander anliegen.

Es ist hierzu ersehen, dass die Kontaktflächen 72, 82 nicht in einer gemeinsamen Ebene liegen, sondern dann Erhebungen und korrespondierende Vertiefungen vorgesehen sind. Solche dreidimensionale Kontaktflächen 72, 82 führen dazu, dass die Kettengliedelemente 70, 80 im gekoppelten Zustand einen besonders stabilen Verbund bilden.

Aus Fig. 7A und 7B ist auch zu ersehen, dass die Schwenkführungsgeometrien 58, 59 auf die beiden Kettengliedelemente 70, 80 verteilt sind. Während an beiden Kettengliedelementen 70, 80 jeweils eine nach innengewandte Schwenkführungsgeometrie 58 vorgesehen ist und eine der nach außen gewandten Schwenkführungsgeometrie 59 alleine am Kettengliedelement 80 vorgesehen ist, wird eine der nach außen gewandten Schwenkführungsgeometrien 59 durch beide Kettengliedelemente 70, 80 gemeinsam gebildet. Ergebnis dessen ist, dass die Kettengliedelemente 70, 80 zusätzlich aneinander gesichert sind, sobald das entsprechende Schubkettenglied 50 Teil einer Schubkette 20 ist.

Der Hauptbestandteil der Kopplungder Kettengliedelemente 70, 80 aneinander wird allerdings über ein Kopplungselement 90 erzielt. Im vorliegenden Falle handelt es sich um einen metallischen Kopplungsstift 90, der nach Zusammenführung der Kettengliedelemente 70, 80 in einen hierfür vorgesehenen Stiftkanal 92 in Längsrichtung 2 des Schubkettengliedes 50 eingesetzt ist, der sich durch beide Kettengliedelemente 70, 80 erstreckt. Zusammen mit den konturierten Kontaktflächen 72, 82 sowie den im Betrieb die Kopplung der Kettengliedelemente 70, 80 stützenden Stege 60 und Nuten 61 wird ein sehr stabiles Schubkettenglied 50 zur Verfügung gestellt, welches die bei vielen Anwendungsfeldern auftretenden Kräfte aufnehmen kann.

Im Kontext des eingangs genannten Fahrzeugs 100 und des dortigen Slide-Out-Kastens 130 ist ein Antriebssystem 150 mit vier Schubkettenverbunden 14 geeignet, den Slide-Out-Kasten auszufahren und einzufahren, wobei die Gesamtmasse des Slide-Out-Systems vergleichen mit bekannten Systemen gering ist.

## Patentansprüche

1. Schubkette (20) mit den folgenden Merkmalen:
a. die Schubkette (20) besteht aus einer Mehrzahl von Schubkettengliedern (50), die schwenkbeweglich aneinander angebracht sind und die in einem in einer Ausfahrrichtung (4A) ausgefahrenen Zustand der Schubkette (20) in einer Längsrichtung (2) der Schubkettenglieder (50) orientiert sind, und
b. die Schubkettenglieder (50) weisen jeweils zwei Kettengliedelemente (70, 80) auf, die direkt oder unter Verwendung eines Kopplungselements (90) miteinander ortsfest gekoppelt sind und gemeinsam die Außenkontor des Schubkettengliedes (50) definieren.

2. Schubkette (20) nach Anspruch 1 mit dem folgenden weiteren Merkmal:
a. das Kopplungselement (90) ist in Form eines Kopplungsstiftes (90) ausgebildet, insbesondere in Form eines metallischen Kopplungsstiftes (90), der in einem Stiftkanal (92) angeordnet ist, der sich durch beide Kettengliedelemente (70, 80) erstreckt,
vorzugsweise mit den folgenden zusätzlichen Merkmalen:
b. der Stiftkanal (92) erstreckt sich in der Längsrichtung (2) des Schubkettengliedes (50) und/oder
c. der Stiftkanal (92) erstreckt sich in einer Verlaufsrichtung (3), wobei die Kettengliedelemente (70, 80) des Schubkettengliedes (50) bzgl. dieserVerlaufsrichtung (3) durch ihre jeweilige Formgebung zumindest bezüglich einer Relativverlagerungsrichtung und vorzugsweise bezüglich beider Relativverlagerungsrichtungformschlüssig miteinander gekoppelt sind.

3. Schubkette (20) nach einem der vorstehenden Ansprüche mit mindestens einem derfolgenden weiteren Merkmalen:
a. die Schubkettenglieder (50) weisen jeweils eine Außenkontur auf, durch die die Schwenkbeweglichkeit zweier unmittelbar miteinander gekoppelter Schubkettenglieder in einer Kettenebene der Schubkette (20) in einer Knickrichtung über die gestreckte Stellung mit paralleler Längsrichtung (2) hinaus unterbunden ist, und/oder
b. die Schubkettenglieder (50) weisen jeweils eine Außenkontur auf, durch die die Schwenkbeweglichkeit zweier unmittelbar miteinander gekoppelter Schubkettenglieder in einer Kettenebene der Schubkette (20) gegenüber einer gestreckten Ausrichtung auf einen Winkel von weniger als 100° beschränkt wird, vorzugsweise auf 90°.

4. Schubkette (20) nach einem der vorstehenden Ansprüche mit dem folgenden weiteren Merkmal:
a. die Kontaktflächen (72, 82) an den beiden Kettengliedelementen (70, 80), in denen die Kettengliedelemente (70, 80) jeweils am anderen Kettengliedelement (80, 70) anliegen, weisen eine von der Ebene abweichende dreidimensionale Formgebung auf,
vorzugsweise mit dem folgenden zusätzlichen Merkmal:
b. die Kettengliedelemente (70, 80) weisen eine Formgebung auf, durch die sie im zusammengesetzten Zustand gegen eine Relativverlagerung in Längsrichtung der Schubkette formschlüssig gesichert sind.

5. Schubkette (20) nach einem der vorstehenden Ansprüche mit den folgenden weiteren Merkmalen:
a. die Schubkette (20) weist auf einer Antriebsseite eine Verzahnung (24) auf, und
b. die Verzahnung (24) wird durch Zahnstrukturen an einer Antriebsseite (55) der Schubkettenglieder (50) gebildet, und
vorzugsweise mit mindestens einem der folgenden zusätzlichen Merkmale:
c. die Zahnstrukturen zweier benachbarter Schubkettenglieder (50) weisen keinen Zahn auf, der durch die beiden Zahnstrukturen gemeinsam gebildet wird, und/oder
d. auf einer der Antriebsseite gegenüberliegenden Seite ist eine Gleitfläche (57) vorgesehen.

6. Schubkette (20) nach einem der vorstehenden Ansprüche mit dem folgenden weiteren Merkmal:
a. die Schubkette (20) weist mindestens ein Schubkettenglied (50) auf, welches zum überwiegenden Teil aus Kunststoff besteht, wobei vorzugsweise die beiden Kettengliedelemente (70, 80) vollständig aus Kunststoff oder aus faserverstärktem Kunststoff ausgebildet sind,
insbesondere mit dem folgenden zusätzlichen Merkmal:
b. die Kettengliedelemente (70, 80) sind aus glasfaserverstärktem Kunststoff hergestellt, wobei insbesondere ein Kunststoffanteil aus Polyoxymethylen besteht und/oder ein Glasfaseranteil an einer Gesamtmasse der Kettengliedelemente (70, 80) mindestens30% beträgt.

7. Schubkette (20) nach einem der Ansprüche 1 bis 5 mit dem folgenden weiteren Merkmal:
a. die Schubkette (20) weist mindestens ein Schubkettenglied (50) auf, welches zum überwiegenden Teil aus Leichtmetall, insbesondere Aluminium, besteht oder welches als Feingussteil, insbesondere aus Stahl, hergestellt worden ist.

8. Schubkette (20) nach einem der vorstehenden Ansprüche mit dem folgenden weiteren Merkmal:
a. die Schubkette (20) weist mindestens zwei Schubkettenglieder (50) auf, die aus unterschiedlichen Materialien hergestellt sind,
vorzugsweise mit den folgenden weiteren Merkmalen,
b. mindestens ein Schubkettenglied (50) besteht zum überwiegenden Teil aus Kunststoff, und
c. mindestens ein Schubkettenglied (50) besteht zum überwiegenden Teil aus Metall, insbesondere aus Aluminium.

9. Schubkette (20) nach einem der vorstehenden Ansprüche mit den folgenden weiteren Merkmalen:
a. die Schubkette (20) weist mindestens zwei miteinander unmittelbar schwenkbeweglich verbundene Schubkettenglieder (50) auf,
b. die Kettengliedelemente (70, 80) eines ersten der mindestens zwei Schubkettenglieder (50) bilden ein gabelförmiges Gelenkaußenteil (56A) mit zwei aufeinander zu weisenden Schwenkführungsgeometrien (58), und
c. die Kettengliedelemente (70, 80) eines zweiten der mindestens zwei Schubkettenglieder (50) bilden ein Gelenkinnenteil (56B) mit zwei voneinander weg weisenden Schwenkführungsgeometrien (59), die mit den Schwenkführungsgeometrien (58) des Gelenkaußenteils (56A) des ersten Schubkettengliedes (50) in Eingriff stehen.

10. Schubkette (20) nach Anspruch 9 mit dem folgenden weiteren Merkmal:
a. die Schwenkführungsgeometrien (58, 59) des Gelenkaußenteils (56A) und/oder des Gelenkinnenteils (56B) verfügen über mindestens einen umlaufenden Führungssteg, vorzugsweise über eine Mehrzahl von konzentrischen umlaufenden Führungsstegen,
vorzugsweise mit dem folgenden zusätzlichen Merkmal:
b. mindestens eine Schwenkführungsgeometrie (58, 59) des Gelenkaußenteils (56A) oder des Gelenkinnenteils (56B) wird gemeinsam durch beide Kettengliedelemente (70, 80) gebildet.

11. Schubkette (20) nach einem der vorstehenden Ansprüche mit mindestens einem derfolgenden weiteren Merkmale:
a. mindestens einige der Schubkettenglieder (50) weisen einen seitlichen Kopplungskörper (52) auf, der vorzugsweise einstückiger Teil eines der Kettengliedelemente (80) ist, und/oder
b. zwei unmittelbar miteinander schwenkbar verbundene Schubkettenglieder (50) definieren einen seitlichen Aufnahmeraum (54) für einen Kopplungskörper (52), wobei dieser Aufnahmeraum (54) derart ausgebildet ist, dass er durch Verbringung der beiden Schubkettenglieder (50) in einer gestreckten Ausrichtung partiell verschlossen wird, so dass ein hierein eingefahrenen Kopplungskörper (52) einer anderen Schubkette (20) nicht mehr quer zu einer Ausfahrrichtung herausgezogen werden kann.

12. Schubkette (20) nach einem der vorstehenden Ansprüche mit dem folgenden weiteren Merkmal:
a. die Schubkettenglieder (50) weisen eine Formgebung einer in Ausfahrrichtung (4A) weisenden Stirnfläche und eine Formgebung einer in Einfahrrichtung (4B) weisenden Stirnfläche auf, die aufeinander so abgestimmt sind, dass zumindest im gestreckten Zustand der Schubkettenglieder (50) ein Formschluss orthogonal zur Ausfahrrichtung (4A) bewirkt wird,
vorzugsweise mit dem folgenden zusätzlichen Merkmal:
b. die in Ausfahrrichtung (4A) weisenden Stirnflächen und die in Einfahrrichtung (4B) weisenden Stirnfläche der Schubkettenglieder (50) sind derart geformt, dass der Formschluss orthogonal zur Ausfahrrichtung (4A) in gestrecktem Zustand der Schubkettenglieder (50) gegeben ist und durch Knicken der Schubkettenglieder (50) in der Kettenebene der Schubkette (20) zum Zwecke der Montage / Demontage aufgehoben werden kann.

13. Schubkette (20), insbesondere nach einem der vorstehenden Ansprüche, mit den folgenden Merkmalen
a. die Schubkette (20) besteht aus einer Mehrzahl von Schubkettengliedern (50), die schwenkbeweglich aneinander angebracht sind, und
b. die Schubkettenglieder (50) weisen jeweils zwei Kettengliedelemente (70, 80) auf, die zur Bildung eines Schubkettengliedes miteinander verbunden sind und gemeinsam folgende Komponenten des Schubkettengliedes (50) bilden:
- ein Gelenkaußenteil (56A) mit zwei aufeinander zu weisenden Schwenkführungsgeometrien (58), und
- ein Gelenkinnenteil (56B) mit zwei voneinander weg weisenden Schwenkführungsgeometrien (59) zur Zusammenwirkung mit dem Gelenkaußenteil (56A) des jeweils nächsten Schubkettengliedes (50), und
- eine Tragstruktur, die Druckkräfte zwischen dem Gelenkinnenteil (56B) und dem Gelenkaußenteil (56A) eines Schubkettengliedes aufnehmen kann.

14. Schubkettenglied (50) für eine Schubkette nach Anspruch 1 bis 13, mit dem folgenden weiteren Merkmal:
a. das Schubkettenglied (50) weist jeweils zwei Kettengliedelemente (70, 80) auf, die direkt oder unter Verwendung eines Kopplungselements (90) miteinander ortsfest gekoppelt sind und gemeinsam die Außenkontor des Schubkettengliedes (50) definieren.

15. Schubkettenverbund (14) mit den folgenden Merkmalen:
a. der Schubkettenverbund (14) weist mindestens zwei Schubketten (20) auf, und
b. die mindestens zwei Schubketten (20) sind derart durch einen Ausfahrvorgang anordenbar, dass sie sich aneinander abstützen, und
**gekennzeichnet durch** das folgende Merkmal:
c. die Schubketten (20) sind nach einem der Ansprüche 1 bis 13 ausgebildet,
vorzugsweise mit mindestens einem der folgenden Merkmale:
d. die mindestens zwei Schubketten (20) verfügen über korrespondierende Kopplungsgeometrien (52, 54), die im gekoppelten Zustand formschlüssig aneinander gesichert sind und so einer Trennung der Schubketten (20) quer zu einer Ausfahrrichtung (4A) entgegenwirken, und/oder
e. die mindestens zwei Schubketten (20) verfügen jeweils auf einer Antriebsseite (55) über eine Verzahnung (24), wobei die Antriebsseiten (55) der mindestens zwei Schubketten (20) in die gleiche Richtungweisen und wobei die Verzahnung (24) beiderSchubketten (20) über die Schubketten (20) hinweg miteinander fluchten.

16. Schubkettenmodul (10) mit den folgenden Merkmalen:
a. das Schubkettenmodul (10) weist einen Schubkettenverbund (14) mit mindestens zwei Schubketten (20) auf, und
b. das Schubkettenmodul (10) weist für jede Schubkette (20) einen Schubkettenspeicher (19) zur Aufnahme der Schubkette (20) in einem eingefahrenen Zustand auf, und
c. das Schubkettenmodul (10) weist mindestens ein Antriebszahnrad (16) zum gemeinsamen Ausfahren der Schubketten (20) auf,
**gekennzeichnet durch** das folgende Merkmal:
d. der Schubkettenverbund (14) ist nach Anspruch 15 ausgebildet,
vorzugsweise mit mindestens einem der folgenden zusätzlichen Merkmale:
e. das Schubkettenmodul (10) weist einen Fügebereich (17) auf, im Bereich dessen die beiden Schubketten (20) beim Ausfahren gefügt werden, wobei im Fügebereich (17) einander gegenüberliegende Führungsflächen vorgesehen sind, mittels derer die Schubkettenglieder (50) der Schubketten (20) aufeinander zu kraftbeaufschlagt werden, wobei vorzugsweise die Führungsfläche eine aus Kunststoff gefertigte Gleitfläche aufweist, die in Richtung der Schubketten (20) weist, und/oder eine Messvorrichtung zur Messung eines Verschleißzustandes der Führungsflächen vorgesehen ist, insbesondere zur Messung des Verschleißzustandes der Gleitfläche aus Kunststoff, und/oder
f. das Schubkettenmodul (10) weist ein gemeinsames Antriebszahnrad (16) zum Antrieb von mindestens zwei Schubketten (20) auf, welches mit jeweils einem Schubkettenglied (50) der mindestens zwei Schubketten (20) im Eingriff steht.

17. Slide-Out-Anordnung (140) für ein Fahrzeug mit den folgenden Merkmalen:
a. die Slide-Out-Anordnung (140) umfasst eine fahrzeugseitige Baugruppe (142) zur Anbringung am Chassis des Fahrzeugs, und
b. die Slide-Out-Anordnung (140) umfasst eine slide-out-seitige Baugruppe (144) zur Anbringung an einem Slide-Out-Kasten (130), und
c. die Slide-Out-Anordnung (140) umfasst ein Antriebssystem (150), mittels dessen die fahrzeugseitige Baugruppe (142) und die slide-out-seitige Baugruppe (142) gegeneinanderverfahrbar sind,
**gekennzeichnet durch** das folgende Merkmal:
d. das Antriebssystem (150) umfasst mindestens eine Schubketten (20) nach einem der Ansprüche 1 bis 13.

18. Fahrzeug (100), insbesondere Wohnmobil, mit einer Slide-Out-Anordnung mit den folgenden Merkmalen:
a. das Fahrzeug (100) weist einen Fahrzeuginnenraum (110) auf, und
b. das Fahrzeug (100) weist eine Slide-Out-Anordnung (140) mit einem Slide-Out-Kasten (130) auf, der verlagerbar ist zwischen einer Stau-Endlage, in der eine Außenseite des Slide-Out-Kastens (130) im Wesentlichen mit der umgebenden Seitenwandung fluchtet, und einer Nutz-Endlage, in der der Slide-Out-Kasten (130) zur Vergrößerung des Fahrzeuginnenraum (110) nach außen ausgefahren ist,
**gekennzeichnet durch** das folgende zusätzliche Merkmal:
c. die Slide-Out-Anordnung (140) ist nach Anspruch 17 ausgebildet.
